# EUROPEAN PATENT SPECIFICATION

(11) **EP 1 296 811 B1**
(45) Date of publication and mention of the grant of the patent: **26.01.2005**
(21) Application number: 01940902.8
(22) Date of filing: 25.06.2001
(51) Int. Cl.: B29C 49/20, B29C 49/42

(54) **DEVICE AND METHOD FOR INCLUDING INSERTS IN BLOW MOLDED PLASTIC ELEMENTS**
VORRICHTUNG UND VERFAHREN ZUM EINBRINGEN VON EINSÄTZEN IN BLASGEFORMTE KUNSTSTOFFELEMENTE
APPAREIL ET PROCEDE D'INCLUSION D'INSERTS DANS DES ELEMENTS EN PLASTIQUE MOULES PAR SOUFFLAGE

(30) Priority: 26.06.2000 IT BO000037
(43) Date of publication of application: 02.04.2003
(73) Proprietor: Ferno Washington Italia S.r.l, 50047 Prato (IT)
(72) Inventor: LAPINI, Alessandro, I-50026 San Casciano V.P. (IT); BRUNI, Raffaello, I-40136 Bologna (IT)
(74) Representative: Negrini, Elena
(86) International application number: PCT/IB2001/001116
(87) International publication number: WO 2002/000417

(56) References cited:
- WO-A-01/03627
- US-A- 3 954 369
- US-A- 4 719 072
- DATABASE WPI Section Ch, Week 199527 Derwent Publications Ltd., London, GB; Class A96, AN 1995-203383 XP002177508 & JP 07 117105 A (UCHITO KASEI KK), 9 May 1995 (1995-05-09)

## Description

### TECHNICAL FIELD

The present invention relates to a device and a method for including inserts in blow molded plastic elements, according to the preamble of claim 1 and of claim 9, respectively.

The inserts may be e.g. metallic.

### BACKGROUND OF THE INVENTION

The known devices allow the positioning of inserts on the internal surfaces of mold elements of blow molding machines. The molding machine head extrudes a plastic cylinder, the so-called "parison", which is positioned between the mold elements in opening condition. Subsequently the mold elements are closed so getting a closing condition of the mold containing said parison into which compressed air is blown.

The air pressure forces the parison against the inside surface of the mold so that the parison takes its shape and, at the same time, causes the inclusion of the inserts into the parison wall.

The following cooling of the parison plastic material allows its solidification with the obtained shape and the fixing of the inserts.

The known devices for the insert positioning consist in supports, for instance cylinder or pin shaped, and they are of fixed or dynamic insertion type. The known devices for the insert positioning are fit in insert hollows for instance female thread of nuts or shaped elements. The known devices for the fixed positioning are immovably fit inside the molds. The devices for the dynamic positioning of the inserts are applied to the molds in correspondence of related inner hollows of these latter housing the insert too.

The dynamic devices hold the inserts in the hollows until the parison mate the inside wall of the mold. In this last condition, the insert is dynamically inserted by the fixing device into the parison wall. When the plastic material of the parison is consolidated, the fixing device is withdrawn in order to allow the separation of the molded product from the mold.

The main drawback of said known devices consists in the difficulty or impossibility of including inserts having wide dimensions.

A further drawback consists in that said known devices do not allow to include inserts having wide inclination angles with respect to the local surface of the mold and they do not allow to include inserts in correspondence of mold surfaces with small bending radius.

Another drawback of said known supporting devices consists in that they must be fixed to the mold and eventually have driving means and hollows in said mold.

There are also known devices for positioning the inserts fixed to the lower blow frame of the molding machine. This layout provides the inclusion of the insert inside the free end of the parison and the insert inclusion into the wall of the manufactured article obtained from the parison thanks to the mold action. The known devices, for positioning the inserts, fixed to the lower blow frame overcome some of the limitations of the fixed and dynamic devices, but said devices have the drawback due to the insufficient fixing of the inserts having high longitudinal length which, being stopped at one side only, may have excessive clearance at the opposite end.

A further drawback consists in positioning the inserts only in correspondence of the mold lower end.

Documents US 4 719 072A; JP 07 117 105A; US 3 954 369A refer to methods or apparatus to support an insert inside a parison to be formed releasing a product including said insert. WO01/03 627A refers to a method to produce by blow moulding a stretcher provided with insert elements included in the plastic material forming the stretcher.

The object of the present invention consists in proposing a device and a method that allow the inclusion of inserts having shape and dimensions substantially independent from the parison thickness and the form and dimensions of the mold, in proposing a device and a method for including inserts also articulated and/or jointed in proposing a device and a method allowing the inclusion of inserts in correspondence of the mold upper end and in correspondence of surfaces having small bending radius and any form and in proposing a device and a method which do not require inside the mold particular devices or machining and therefore have a simple and reliable operation.

This object is achieved according to the invention by the device as defined in claim 1 and by the method as defined in claim 9. Particular embodiments of the invention are the subject of the dependent claims.

### BRIEF DESCRIPTION OF THE DRAWINGS

The characteristics of the invention are underlined in the following with particular reference to the attached drawings, in which:
- figure 1 show a schematic side view of a blow molding machine having the positioning device object of the present invention;
- figure 2 shows a schematic front view of the device of figure 1 from which some elements have been removed for better underlining others;
- figure 3 shows a front enlarged section view of details of the device of figure 1 from which some parts have been removed for better underlining others;

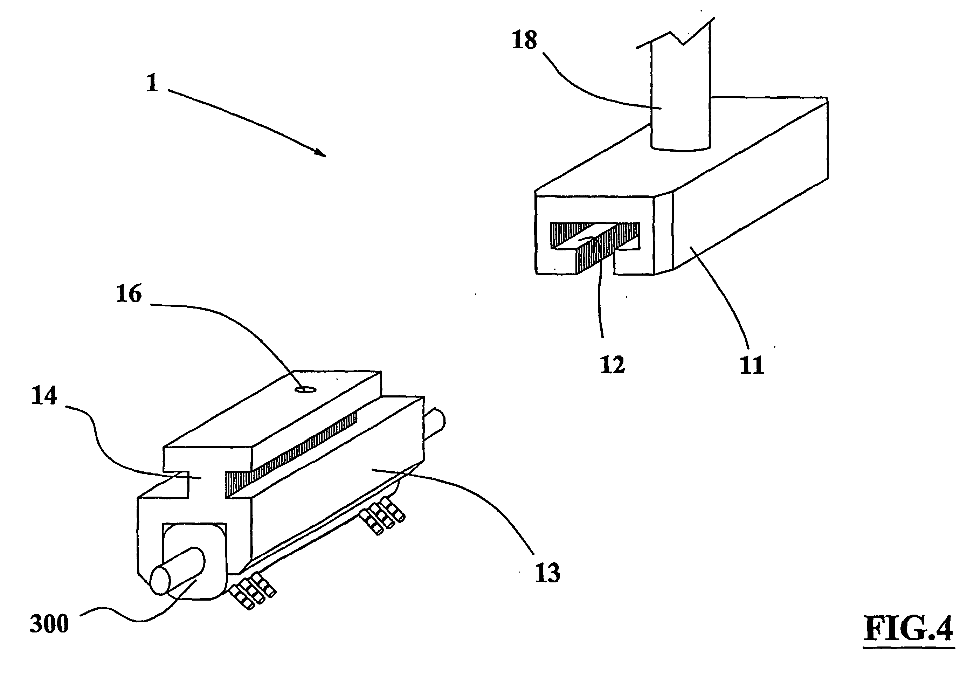

- figure 4 shows an enlarged axonometric view of insert holder means in an uncoupled condition from the device of figure 1;

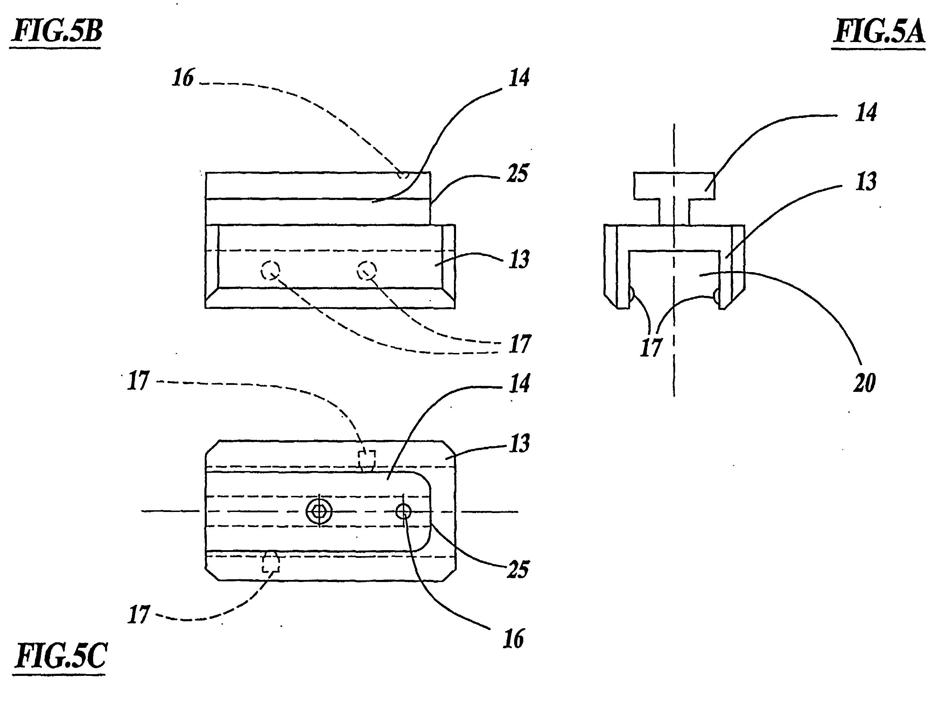

- figures 5A, 5B and 5C show respectively a side, a front and top view of an element of figure 4;

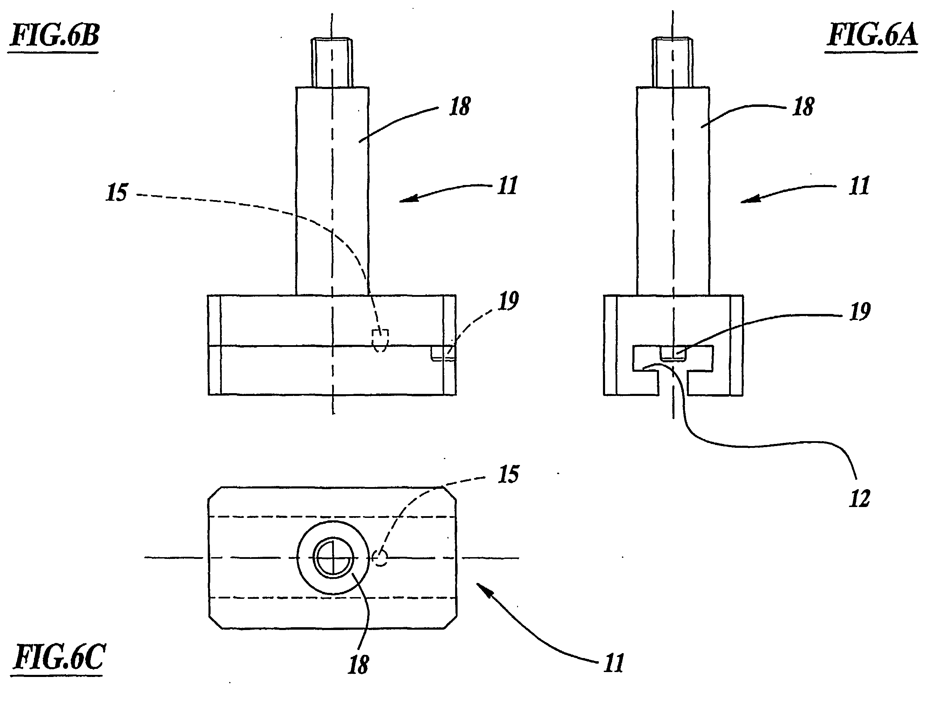

- figures 6A, 6B and 6C show respectively a side, front and top view of an element of figure 4;
- figures 7A and 7B show respectively an enlarged partial section side view and enlarged top view of details of figure 1;
- figure 8 shows a sample of an insert;
- figure 9 shows side partial view of a variant of the insert holder means of figure 4.

### BEST MODE OF CARRYING OUT THE INVENTION

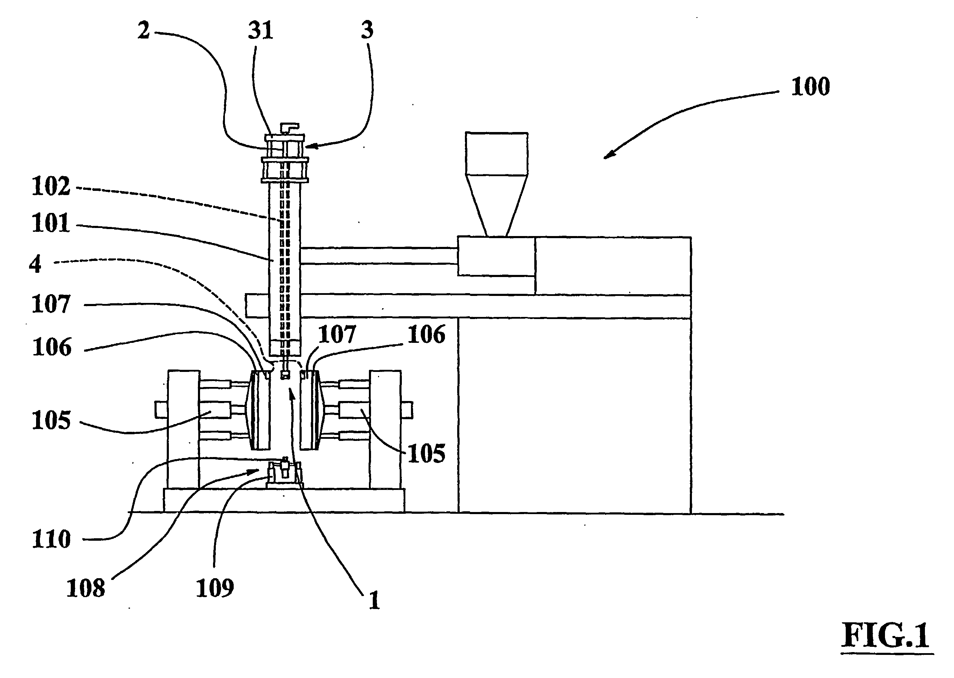

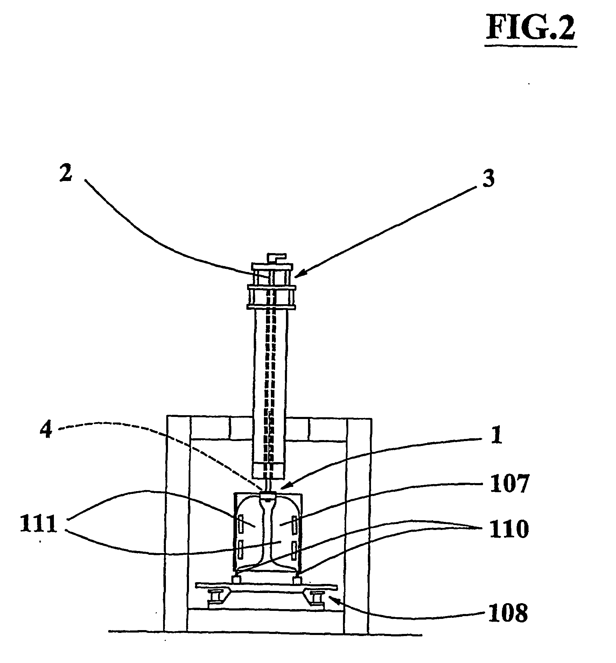

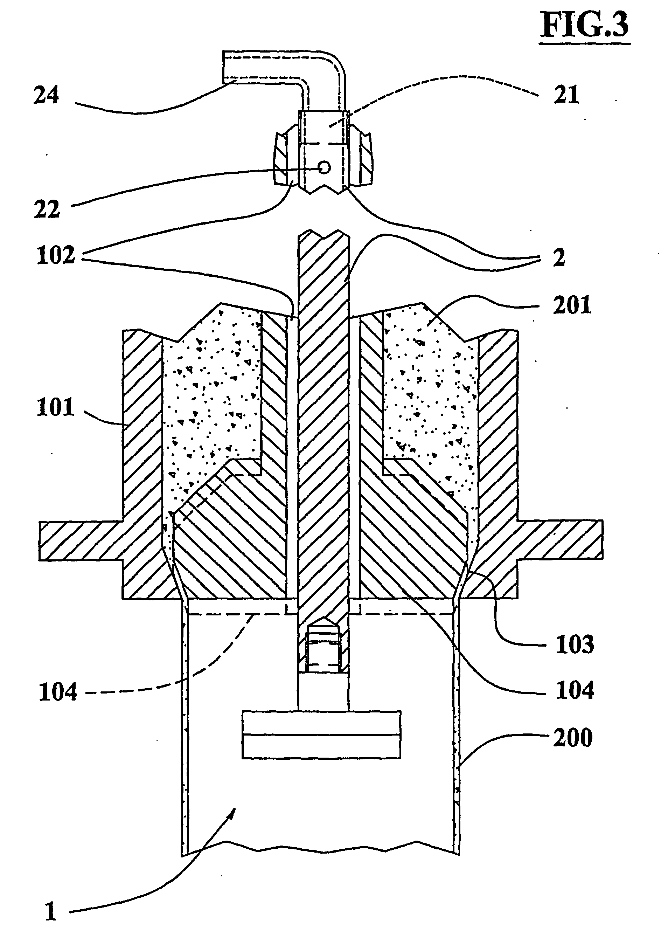

With reference to figures 1-3, numeral 100 indicates a blow molding machine including first linear actuators 105 for the movement of fixing plates 106 for a couple of molding means 107 consisting of elements carrying out, in a closing condition, a mold fit to form with a predefined shape the elements to be blow molded. Under the molding means 107 there are lower blowing means 108 including second linear blowing actuators 109 for the vertical movement of lower blowing nozzles 110.

Above the molding means 107 there is a bunching head 101 crossed along all its length by an axial hole 102 and overlapped by constrain means 3 for rod means 2, which cross the axial hole 102 and end under the head 101. The external diameter of the rod means 2 is smaller than the diameter of the axial hole 102. The lower portion of the head 101 has a draw-plate 103 and a vertically movable plunger 104. The draw-plate 103 and a plunger 104 can be of convergent or divergent type. The included volume between these latter is filled by the thermoplastic material at the fluid state 201 that, under the effect of the pressures exerted by the bunching head 101, is extruded so forming a parison 200.

The vertical movement of the plunger 104 changes the distance between this latter and the draw-plate 103 and therefore the thickness of the parison 200. With reference to the convergent draw-plates, in the lower extreme position of the plunger 104 this latter contacts the draw-plate 103 avoiding the emission of the parison 200 and causing the interruption of this latter. Vice versa in the divergent draw-plates there is the interruption of the parison when the plunger 104 is at the upper extreme position.

The rod 2 has on the upper part a longitudinal hole 21 ending into the axial hole 102 through a plurality of radial holes 22. The lower and upper ends of the rod 2 are fixed respectively to insert holder means 1 and fitting means 24 in flow communication with the longitudinal hole 21. The molding means 107 have housings 4 fit to house the insert support means 13 in a mold closing condition.

With reference to the figures from 4 to 6C, the insert holder means 1 are essentially constituted by the connection means 11 and by the support means 13 of the inserts 300. The connection means 11 are orthogonal fixed to the rod 2 by fixing means 18 consisting, for instance, in a threaded element coupling with a corresponding thread carried out in the lower end of the rod 2. The connection means 11 have, orthogonally to the first fixing means 18, first guide means 12 consisting in a longitudinal slot with "T" section and that have retainer means 19 at an end. The connection means 11 have also a couple of first elastic stopper means 15 each consisting, for instance, in a mobile sphere partially held in a cylindrical cavity ending in the volume of the first guide means 12; the cavity also contains a compressed spring transmitting an elastic force to the sphere.

The insert support means 13 have second guide means 14 for joining slidingly the first guide means 12 and on which it is carried out a couple of housings 16 having a concave calotte shape, for the first elastic stopper means. In correspondence of the coupling between the connection means 11 and the insert support means 13, an end 25 of the second guide means 14 mate the retainer means 19 and the first elastic stopper means 15 mating the housings 16 for the first elastic stopper means so carrying out a removable connection.

Furthermore the insert support means 13 have a hollow concavity forming a seat 20 for the inserts 300 and opposite to the second guide means 14. The seat 20 for the inserts 300 is shaped for housing inserts 300 which are removably held by a plurality of second elastic stopper means 17, for instance of the same type of the first elastic stopper means 15, and positioned sideways facing the housing for the inserts.

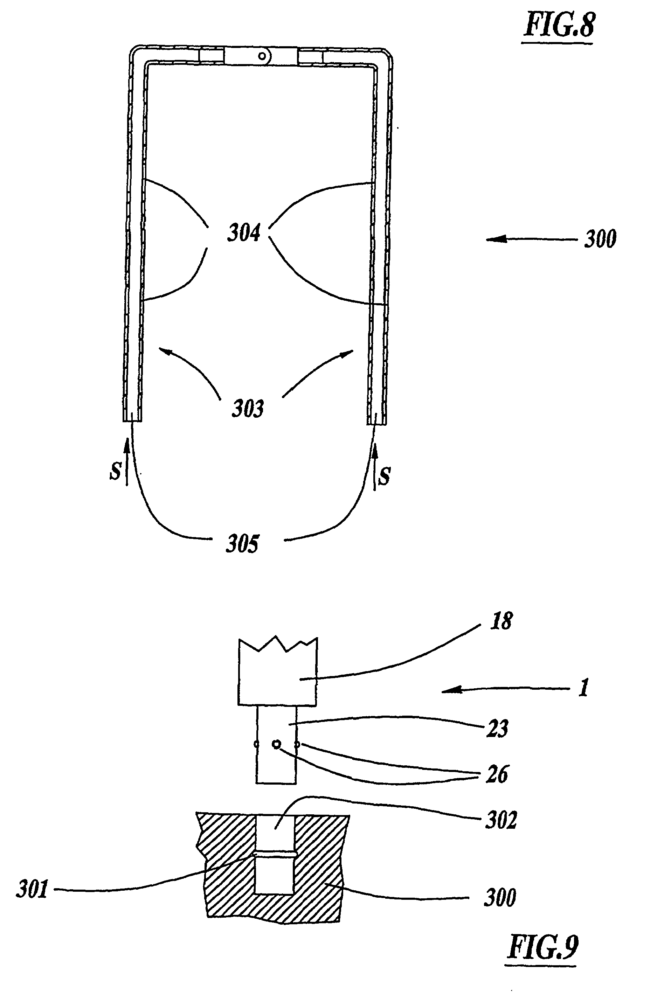

Figure 9 shows a variant of the insert holder means 1 provided with a protruding connection 23, for instance having cylindrical or prismatic form, having a plurality of third elastic stopper means 26 respectively fit to engage a related complementary housing 302, carried out in the inserts 300, and to removably support these latter acting on the inside wall of the complementary housing 302 or engaging optional annular stopper means 301 of the third elastic stopper means 26, carried out inside the complementary housing 302. This variant allows an almost full inclusion of the insert 300 inside the parison 200.

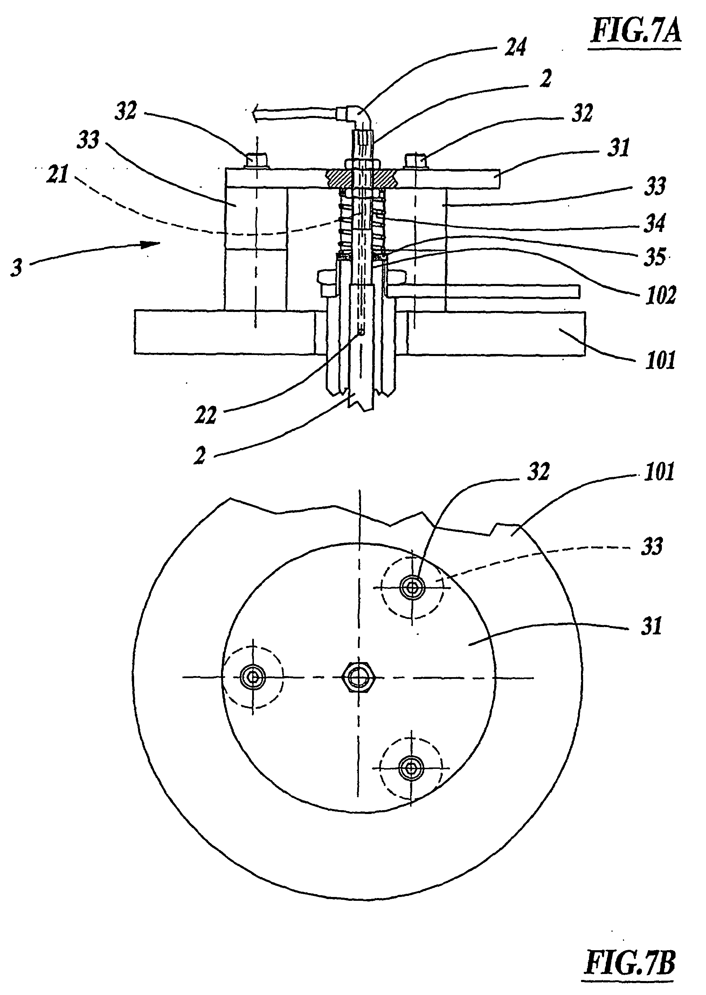

In figures 7A and 7B numeral 31 indicates a plate fixed to the upper end of the head 101 through a plurality of screw means 32. Each of the screw means crosses a related first elastic mean 33, for instance of tubular type in synthetic elastic material, interposed between the plate 31 and the head 101. The upper portion of the rod 2 is threaded and crosses the plate 31 to which is fixed by means of nuts. Second elastic means 34, consisting for instance in a helical spring, are coaxial to the rod 2 and interposed between plate 31 and pneumatic sealing means 35 between the upper end of the axial hole 102 and the external wall of the rod 2.

The interposition of the elastic means first 33 and second 34 between the plate 31 and the upper portion of the head 101 assures an elastically yielding fixing of the rod 2 and therefore the insert holder means 1. The operation provides the positioning of the insert 300 in the seat 20 for the inserts 300 of the insert support means 13 in which it is held by the second elastic stopper means 17 thanks to the friction between these latter and the walls of said insert 300.

The insertion of the insert 300 in the support means 13 may occur both in correspondence of a coupling condition of these latter with the connection means 11 and in an uncoupling condition. It is important to notice that these possibilities allow, in the first case, to effect a rapid insertion and in the second case to provide an accurate insertion of the insert and afterward joining the support means 13 with the connection means 11.

The vertical position of the insert 300 in comparison to the molding means 107 can be adjusted acting on the fixing nuts of the upper portion of the rod 2 to the plate 31. The insert is fixed therefore in a preset position in correspondence of related housing made in the molding means 107.

The elasticity of the support means 3 allows the insert holder means I to settle into the housings 4. The extrusion of the parison 200 from the draw-plate 103 and the plunger 104 occurs according to the normal procedures of the blow molding machines 100.

Before closing the molding means 107, it is provided a pre-blow with compressed air coming from generators, for instance a compressor not shown, connected to the fitting means 24 and in flow communication with the longitudinal hole 21 and therefore, through the radial holes 22, with the axial hole 102. The pre-blow of air in pressure has the purposes to cool the elements licked by the air and to effect a first partial pressure increase in the parison 200.

While closing the molding means 107 is operated the blow of pressured air coming from the related generators to force the parison against the inside walls of molding means and, partially, against the insert 300 which is therefore partially included in the manufactured article carried out from the parison. It is provided that the blow is executed through the lower blow means 108 and/or through the same canalization used for the pre-blow.

At the end of the molding, after opening the molding means 107, the manufactured article and the insert 300 included in said article can be detached from the insert holder means 1 by a manual action requiring a very low strength. Obviously each type of insert 300 will require a different support mean 13 having a hollow seat 20 for the inserts 300 and second elastic stopper means 17 suitable for the insert type.

It is provided that the area of the support means 13 adjacent to the mouth of the hollow seat 20 can be a further molding element operating jointly with the molding means 107 to contain and form the manufactured article during its molding.

It is important to notice that the support means 13 can also stop advantageously inserts 300 of articulated type whose ends can be included in distinct and separate elements carried out by the molding means 107, having related molding sectors 111; therefore two or more elements will be reciprocally fixed by the insert 300 in an articulated way.

For the inclusion of inserts 300, for instance of the type shown in figure 8, which extend along the vertical dimension of the molding means 107, that is from the upper portion to lower one of these latter, it is provided:
- to removably fix the lower portion of the insert 300, constituted by a plurality of lower ends, to the lower blow means 108 in a lowered condition of these latter,
- to raise the lower blow means 108 till the upper end of the insert 300 reaches a related seat 20 made in an insert holder mean 1 fixed under the head 101;
- to activate the blow molding until the opening of the molding means 107;
- to lower the lower blow means 108 and at the same time to disengage the insert 300 from the insert holder 1;
- to release the insert 300 and therefore the plastic elements formed by the lower blow means 108.

In case of application of the lower portion of the insert 300 to the lower blow means 108, it is provided the possibility to execute the blow of compressed air, whose direction is shown by the reference S in figure 8, feed by these latter through the insert 300. With reference to figure 8, the lower portion 303 of the insert 300 includes tubular elements having a plurality of through holes 304 which flow connect the inner cavities of the tubular 305 with the volume inside the parison 200.

The main advantage of the present invention consists in providing a device and a method that allows the inclusion of inserts having shape and dimensions substantially independent of the parison thickness and the mold shape and dimensions. A further advantage of the present invention is that to provide a device and a method for the inclusion of inserts, also articulated, in monolithic or multiple plastic elements carried out by blow in the same mold with several sectors.

Another advantage consists in providing a device and a method also allowing the inclusion of inserts in correspondence of the mold upper end, and in correspondence of surfaces having small bending radius and any shape. Other advantage consists in providing a device and a method that do not require devices or particular machining inside the mold and therefore have a simple and reliable operation.

## Claims

1. Device for including inserts (300) in plastic elements blow molded in molding machine (100) having a head (101) crossed by an axial hole (102), molding means (107) and lower blow means (108), said device includes insert holder means (I) fixed to the lower end of rod means (2) which are inserted into the axial hole (102) and are fixed at the upper position to support means (3) fixed to the upper end of the head (101); said device being **characterized in that** it includes housings (4) made in the molding means (107) and for accommodating the insert holder means (1).

2. Device according to claim 1 **characterized in that** the insert holder means (I) include connection means (11) clamped to the rod (2) by fixing means (18), and support means (13) of the inserts (300) slidingly connected to the connection means (11).

3. Device according to claim 2 **characterized in that** the connection means (11) include first guide means (12), a plurality of first elastic stopper means (15) and retainer means (19); and that the support means (13) of the inserts (300) include second guide means (14) complementary to the first guide means (12), an end (25) for mating the retainer means (19), a plurality of housings (16) for the plurality of first elastic stopper means (15) and a hollow seat (20) for the inserts (300) having a plurality of seconds elastic stopper means (17); said first guide means (12) being slidingly connected to the seconds guide means (14) till the end (25) mates the retainer means (19) and the plurality of the first elastic stopper means (15) mate the plurality of housings (16); the plurality of the second elastic stopper means (17) being fit to removably support the inserts (300) during the molding of the plastic elements.

4. Device according to claim 1 **characterized in that** the insert holder means (1) are fixed to the rod (2) by fixing means (18) with a plurality of protruding connections (23) connected thereto and having third elastic stopper means (26) respectively fit to engage related complementary housings (302) carried out in the inserts (300) and fit to removably support these latter.

5. Device according to any of the preceding claims **characterized in that** the rod means (2) provide a longitudinal hole (21) in flow communication with the axial hole (102) through a plurality of radial holes (22), and that is connected to compressed air generators through fitting means (24).

6. Device according to any of the preceding claims **characterized in that** the support means (3) include:
- a plate (31 ) crossed by an upper portion of the rod means (2) fixed thereto;
- a plurality of screw means (32) for locking the plate (31) to the upper end of the head (101);
- a plurality of first elastic means (33) interposed between the plate (31) and the upper end of the head (101) in such a way that the support means (3) carry out an elastic joining between the pole (2) and the upper end of the head (101).

7. Device according to claim 6 **characterized in that** the support means(3) further include second means (34) coaxial to the rod means (2) and interposed between the plate (31) and the pneumatic sealing means (35) associated to the upper end of the axial hole (102) and fit to guaranty the pneumatic sealing with the rod means (2).

8. Device according to claim 6 **characterized in that** the elastic means (33) consist in substantially elastic hollow cylindrical bodies whose cavity is fit to house a stem portion of the screw means (32).

9. Method for including inserts (300) in blow molded plastic elements in molding machines (100) having a head (101) for carrying out the parison (200) crossed by an axial hole (102) and having molding means (107) and movable lower blow means (108), said method being **characterized in that** provides:
- to removably fix a lower portion (303) of the insert (300) to the lower blow means (108) in a lowered condition of these latter;
- to raise the lower blow means (108) till the upper end of the insert (300) reaches a respective seat (20) made in an insert holder means (1) fixed under the head (101);
- to obtain the parison (200), to close the molding means (107), to blow into said parison (200), to open the molding means (107) making the blow formed plastic element;
- to lower the lower blow means (108) and at the same time to disengage the insert (300) from the insert holder (1);
- to release the plastic elements formed by the lower blow means (108).

10. Method according to claim 9 **characterized in that** provides to blow compressed air fed by the lower blow means (108) through inner cavities (305) of tubes having a plurality of through holes (304), constituting the lower portion of the insert (300).

## Patentansprüche

1. Vorrichtung zum Einbringen von Einsätzen (300) in Kunststoffelemente, die in einer Blasformmaschine (100) blasgeformt sind, welche einen von einem axialen Loch (102) durchquerten Kopf (101), Formmittel (107) und untere Blasmittel (108) hat, welche Vorrichtung Einsatz-Haltemittel ( 1 ) umfasst, die an dem unteren Ende von Stangenmitteln (2) befestigt sind, welche in das axiale Loch (102) eingesetzt und in der oberen Position an Abstützmitteln (3) befestigt sind, welche an dem oberen Ende des Kopfes (101) befestigt sind; welche Vorrichtung **dadurch gekennzeichnet ist, dass** sie Gehäuse (4) umfasst, die in den Formmitteln (107) gebildet sind und zum Aufnehmen der Einsatz-Haltemittel ( 1 ) dienen.

2. Vorrichtung nach Anspruch 1, **dadurch gekennzeichnet, dass** die Einsatz-Haltemittel (1) Verbindungsmittel (11), die an der Stange (2) durch Befestigungsmittel (18) festgespannt sind, und Abstützmittel (13) der Einsätze (300), die mit den Verbindungsmitteln (11) gleitend verbunden sind, umfassen.

3. Vorrichtung nach Anspruch 2, **dadurch gekennzeichnet, dass** die Verbindungsmittel (11) erste Führungsmittel (12), mehrere erste elastische Sperrmittel (15) und Rückhaltemittel (19) umfassen und dass die Abstützmittel (13) der Einsätze (300) zu den ersten Führungsmitteln (12) komplementäre zweite Führungsmittel (14), ein an die Rückhaltemittel (19) angepasstes Ende (25), mehrere Aufnahmen (16) für die ersten elastischen Sperrmittel (15) und einen hohlen Sitz (20) für die Einsätze (300) mit mehreren zweiten elastischen Sperrmitteln (17) umfassen; wobei die ersten Führungsmittel (12) mit den zweiten Führungsmitteln (14) gleitend verbunden sind, bis das Ende (25) die Rückhaltemittel (19) erreicht und die ersten elastischen Sperrmitteln (15) die betreffenden Aufnahmen (16) erreichen, wobei die zweiten elastischen Sperrmittel (17) in der Lage sind, die Einsätze (300) während des Formens der Kunststoffelemente lösbar abzustützen.

4. Vorrichtung nach Anspruch 1, **dadurch gekennzeichnet. dass** die Einsatz-Haltemittel (1) an der Stange (2) durch Befestigungsmittel (18) befestigt sind, die mit mehreren vorstehenden Verbindern (23) damit verbunden sind und dritte elastische Sperrmittel (26) haben, die mit entsprechenden komplementären Aufnahmen (302) in Eingriff bringbar sind, welche in den Einsätzen (300) gebildet sind und zum lösbaren Abstützen der letzteren dienen.

5. Vorrichtung nach einem der vorhergehenden Ansprüche, **dadurch gekennzeichnet, dass** die Stangenmittel (2) ein längs verlaufendes Loch (21) bilden, das mit dem axialen Loch (102) durch mehrere radiale Löcher (22) in Strömungsverbindung steht und das mit Druckluft-Generatoren durch Anschlussmittel (24) verbunden ist.

6. Vorrichtung nach einem der vorhergehenden Ansprüche, **dadurch gekennzeichnet, dass** die Abstützmittel (3) umfassen:
- eine Platte (31), die von einem oberen Abschnitt der daran befestigten Stangenmittel (2) durchquert wird;
- mehrere Schraubenmittel (32) zum Festlegen der Platte (31) am oberen Ende des Kopfes (101);
- mehrere elastische Mittel (33), die zwischen der Platte (31) und dem oberen Ende des Kopfes (101) so angeordnet sind, dass die Abstützmittel (3) eine elastische Verbindung zwischen der Stange (2) und dem oberen Ende des Kopfes (1) herstellen.

7. Vorrichtung nach Anspruch (6), **dadurch gekennzeichnet, dass** die Abstützmittel (3) zweite Mittel (34) umfassen, die koaxial zu den Stangenmitteln (2) verlaufen und zwischen der Platte (31) und den pneumatischen Dichtungsmitteln (35) angeordnet sind, welche dem oberen Ende des axialen Lochs (102) zugeordnet sind und die pneumatische Abdichtung gegenüber den Stangenmitteln (2) sicherstellen.

8. Vorrichtung nach Anspruch 6, **dadurch gekennzeichnet, dass** die elastischen Mittel (33) aus im wesentlichen elastischen zylindrischen Hohlkörpern bestehen, deren Hohlraum zur Aufnahme eines Schaftabschnittes der Schraubenmittel (32) geeignet ist.

9. Verfahren zum Einbringen von Einsätzen (300) in glasgeformte Kunststoffelemente in Blasformmaschinen (100) mit einem Kopf (101) zum Herstellen des Vorformlings (200), der von einem axialen Loch (102) durchquert wird, und welche Formmittel (107) sowie bewegbare untere Blasmittel (108) haben, welches Verfahren durch die folgenden Schritte gekennzeichnet ist:
- lösbares Befestigen eines unteren Abschnittes (303) des Einsatzes (300) an den Blasmitteln (108) in einem abgesenkten Zustand der letzteren;
- Anheben der unteren Blasmittel (108), bis das obere Ende des Einsatzes (300) einen entsprechenden Sitz (20) erreicht, der in einem unter dem Kopf (101) befestigten Einsatz-Haltemittel (1) gebildet ist;
- Empfangen des Vorformlings (200), um die Formmittel (107) zu schließen, um in den Vorformling (200) einzublasen, und um die Formmittel (107) zu öffnen, wodurch das blasgeformte Kunststoffelement hergestellt wird;
- Absenken der unteren Blasmittel (108) und gleichzeitiges Lösen des Einsatzes (300) aus dem Einsatz-Haltemittel (1);
- Freigeben der von den unteren Blasmitteln (108) geformten Kunststoffelemente.

10. Verfahren nach Anspruch 9, **gekennzeichnet durch** den folgenden Schritt: Einblasen von **durch** die unteren Blasmittel (108) zugeführter Druckluft **durch** die inneren Hohlräume (305) von Rohren, welche mehrere Durchgangslöcher (304) haben, was den unteren Abschnitt des Einsatzes (300) bildet.

## Revendications

1. Dispositif pour inclure des inserts (300) dans des éléments en plastique moulés par soufflage dans une machine à mouler (100) possédant une tête (101) traversée par un trou axial (102), des moyens de moulage (107) et des moyens de soufflage inférieurs (108), ledit dispositif comprenant des moyens de support d'insert (1) fixés à l'extrémité inférieure de moyens formant tige (2) qui sont insérés dans le trou axial (102) et qui sont fixés dans leur position supérieure à des moyens de support (3) fixés à l'extrémité supérieure de la tête (101) ; ledit dispositif étant **caractérisé en ce qu'**il comprend des réceptacles (4) formés dans les moyens de moulage (107) et destinés à loger les moyens de support d'insert (1).

2. Dispositif selon la revendication 1, **caractérisé en ce que** les moyens de support d'insert (1) comprennent des moyens de connexion (11) verrouillés à la tige (2) par des moyens de fixation (18), et des moyens de support (13) des inserts (300) qui sont reliés de manière coulissante aux moyens de connexion (11).

3. Dispositif selon la revendication 2, **caractérisé en ce que** les moyens de connexion (11) comprennent des premiers moyens de guidage (12), une pluralité de premiers moyens d'arrêt élastiques (15) et des moyens de retenue (19) ; et **en ce que** les moyens de support (13) des inserts (300) comprennent des deuxièmes moyens de guidage (14) qui sont complémentaires des premiers moyens de guidage (12), une extrémité (25) s'accouplant aux moyens de retenue (19), une pluralité de réceptacles (16) destinés à la pluralité de moyens d'arrêt élastiques (15) et un siège creux (20) pour les inserts (300) qui possède une pluralité de deuxièmes moyens d'arrêt élastiques (17) ; lesdits premiers moyens de guidage (12) étant reliés de manière coulissante aux deuxièmes moyens de guidage (14) jusqu'à ce que l'extrémité (25) s'accouple aux moyens de retenue (19) et que la pluralité de premiers moyens d'arrêt élastiques (15) s'accouple à la pluralité de réceptacles (16) ; la pluralité de deuxièmes moyens d'arrêt élastiques (17) étant ajustée pour supporter de manière amovible les inserts (300) pendant le moulage des éléments en plastique.

4. Dispositif selon la revendication 1, **caractérisé en ce que** les moyens de support d'insert (1) sont fixés à la tige (2) par des moyens de fixation (18) ayant une pluralité de liaisons en saillie (23) qui leur sont reliées et qui possèdent des troisièmes moyens d'arrêt élastiques (26) qui sont respectivement prévus pour engager les réceptacles complémentaires (302) qui sont pratiqués dans les inserts (300) et pour supporter ces derniers de manière amovible.

5. Dispositif selon l'une quelconque des revendications précédentes, **caractérisé en ce que** les moyens formant tige (2) fournissent un trou longitudinal (21) qui communique avec le trou axial (102) à travers une pluralité de trous radiaux (22), et qui est relié à des générateurs d'air comprimé à travers des moyens de raccord (24).

6. Dispositif selon l'une quelconque des revendications précédentes, **caractérisé en ce que** les moyens de support (3) comprennent :
une plaque (31) traversée par une partie supérieure des moyens formant tige (2) auxquels elle est fixée ;
une pluralité de moyens à vis (32) permettant de verrouiller la plaque (31) à l'extrémité supérieure de la tête (101) ;
une pluralité de premiers moyens élastiques (33) interposés entre la plaque (31) et l'extrémité supérieure de la tête (101) de façon que les moyens de support (3) assurent une jonction élastique entre la tige (2) et l'extrémité supérieure de la tête (101).

7. Dispositif selon la revendication 6, **caractérisé en ce que** les moyens de support (3) comprennent en outre des deuxièmes moyens (34) coaxiaux aux moyens formant tige (2) et interposés entre la plaque (31) et les moyens de fermeture pneumatiques (35) associés à l'extrémité supérieure du trou axial (102) et qui sont ajustés pour garantir l'étanchéité pneumatique avec les moyens formanttige (2).

8. Dispositif selon la revendication 6, **caractérisé en ce que** les moyens élastiques (33) sont composés de corps cylindriques creux sensiblement élastiques dont la cavité est ajustée pour recevoir une partie de colonne des moyens à vis (32).

9. Méthode pour inclure des inserts (300) dans des éléments en plastique moulés par soufflage dans des machines à mouler (100) ayant une tête (101) permettant de former une ébauche (200) traversée par un trou axial (102) et munie de moyens de moulage (107) et de moyens de soufflage inférieurs amovibles (108), ladite méthode étant **caractérisée en ce qu'**elle consiste à :
fixer de manière amovible une partie inférieure (303) de l'insert (300) sur les moyens de soufflage inférieurs (108) lorsque ces derniers sont abaissés ;
élever les moyens de soufflage inférieurs (108) jusqu'à ce que l'extrémité supérieure de l'insert (300) atteigne un siège respectif (20) constitué dans un moyen de support d'insert (1) fixé sous la tête (101) ;
obtenir l'ébauche (200), fermer les moyens de moulage (107), souffler dans ladite ébauche (200), ouvrir les moyens de soufflage (107), former l'élément en plastique formé par soufflage ;
abaisser les moyens de soufflage inférieurs (108) et simultanément désengager l'insert (300) des moyens de support d'insert (1) ;
libérer les éléments en plastique formés par les moyens de soufflage inférieurs (108).

10. Méthode selon la revendication 9, **caractérisée en ce qu'**elle consiste à souffler de l'air comprimé avec les moyens de soufflage inférieurs (108) à travers les cavités intérieures (305) des tubes qui possèdent une pluralité de trous traversants (304), et qui constituent la partie inférieure de l'insert (300).
